# EUROPEAN PATENT SPECIFICATION

(11) **EP 3 898 708 B1**
(45) Date of publication and mention of the grant of the patent: **15.06.2022**
(21) Application number: 19818105.9
(22) Date of filing: 16.12.2019
(51) Int. Cl.: C08F 2/01, C08F 2/02, C08F 10/02, B01J 19/24, B01J 8/00

(54) **HIGH-PRESSURE POLYMERIZATION PROCESS OF ETHYLENICALLY UNSATURATED MONOMERS IN A POLYMERIZATION REACTOR**
HOCHDRUCKPOLYMERISIERUNGSVERFAHREN VON ETHYLENISCH UNGESÄTTIGTEN MONOMEREN IN EINEM POLYMERISATIONSREAKTOR
PROCÉDÉ DE POLYMÉRISATION HAUTE PRESSION DE MONOMÈRES ÉTHYLÉNIQUEMENT INSATURÉS DANS UN RÉACTEUR DE POLYMÉRISATION

(30) Priority: 18.12.2018 EP 18213368
(43) Date of publication of application: 27.10.2021
(73) Proprietor: Basell Polyolefine GmbH, 50389 Wesseling (DE)
(72) Inventor: LITTMANN, Dieter, 35325 Mücke (DE); FINETTE, Andre-Armand, 50997 Köln (DE); WOLF, Christoph, 50259 Pulheim-Dansweiler (DE); DEUERLING, Michael, 53919 Weilerswist (DE); MOHRBUTTER, Juergen, 53347 Alfter (DE); KHAYRULLIN, Danir, 50321 Bruehl (DE); MEI, Giulia, 44122 Ferrara (IT); NEUMANN, Erich, 38126 Braunschweig (DE)
(74) Representative: LyondellBasell
(86) International application number: PCT/EP2019/085394
(87) International publication number: WO 2020/127079

(56) References cited:
- CN-U- 204 447 943
- US-A1- 2018 257 055
- US-A1- 2018 345 238

## Description

### FIELD OF THE INVENTION

The present disclosure relates to a process for polymerizing or copolymerizing ethylenically unsaturated monomers to obtain an ethylene-based polymer in a high-pressure polymerization system comprising a continuously operated polymerization reactor.

### BACKGROUND OF THE INVENTION

Polyethylene is the most widely used commercial polymer. It can be prepared by a couple of different processes. Polymerization in the presence of free-radical initiators at elevated pressures was the method first discovered to obtain polyethylene and continues to be a valued process with high commercial relevance for the preparation of low density polyethylene (LDPE).

A common set-up of a plant for preparing low density polyethylene comprises, besides a polymerization reactor which can be an autoclave or a tubular reactor or a combination of such reactors, further equipment. For pressurizing the reaction components usually a set of two compressors, a primary compressor and a secondary compressor, which is sometimes designated as hyper compressor, is used. At the end of the polymerization sequence, a high-pressure polymerization unit normally further includes apparatuses like extruders and granulators for pelletizing the obtained polymer. Furthermore, such a polymerization unit generally also comprises means for feeding monomers and comonomers, free-radical initiators, modifiers or other substances at one or more positions to the polymerization reaction. Plants for preparing polyethylene are regularly constructed in a manner to be run continuously for long periods of time without any signs of fatigue, thus, in general allowing rather long maintenance intervals.

The polymerization process in a LDPE reactor is carried out at high pressures which can reach 350 MPa. Such high pressure requires special technology for the process to be handled in a safe and reliable manner. It is known that under certain temperature and pressure conditions ethylene can decompose rapidly in an explosive manner to give soot, methane and hydrogen. The drastic increase in pressure and temperature associated therewith - decomposition temperatures can be excessively high (>1000°C) - represents a considerable potential risk for the operational safety of the production plants. For example, the temperatures reached during such a decomposition event can damage the reactor tubes, e.g. it may cause the tube metal to austenize. At temperatures at which the metal austenizes, martensite is being formed in the reactor tubes, if the material is cooled rapidly. Martensite is the hardest and most brittle of the various microstructures found in carbon steels.

Therefore, rapid removal of the hot gas produced by decomposition is believed to be essential during emergency blowdown.

According to WO 2017/098389 A1, such rapid removal of hot gas shall be accomplished by a unidirectional blow down system comprising a front emergency blowdown valve located downstream from a hyper compressor discharge and in the front end of the reactor, and at least one additional valve at the end of the reactor. Here, the system shall prevent the reactor walls from reaching a temperature capable of causing the tube metal to austenize by maintaining flow in a single direction away from the hyper compressor during the blowdown process, and by maintaining specific pressure and flow velocity within the reactor during blowdown. In this manner the amount of heat transfer to the tube reactor shall be minimized.

Another problem is leakage of monomer mixtures which can occur with reaction plants which are run under high pressure and at high temperatures such as polyethylene formation. Also in such instances, i.e. after detection of a leakage of monomers or reaction mixture, the polymerization process is usually interrupted and the polymerization plant is depressurized. The detection of leakages can, for example, be accomplished by IR point detectors as disclosed in WO 2017/194491 A1.

Within conventional polyethylene plants such as LDPE plants, depressurization systems make use of a so-called blow down vessel, which is located inside a so-called reactor bay. Regularly, in case of an emergency, the shutdown requires to depressurize both the secondary compressor and the reactor. EP 0 272 512 A2 discloses that it is also possible to divide the high pressure polymerization system into a plurality of isolated sections at the same time as shutdown is triggered and only the section in which the shutdown is triggered is depressurized. The reactor content comprising both hot ethylene and hot polymer is disposed into the reactor blow down vessel via one or more emergency expansion valves in order to quench the hot gases with water and to separate the waste polymer from ethylene. The latter is usually sent to atmosphere at safe location and the polymer is retained inside the blow down vessel. EP 0 266 543 A2 discloses that the depressurized reaction mixture is passed through at least two separating tanks installed in series, before reaching the atmosphere. In order to empty the blow down vessel from the polymer water slurry retained therein, it is common practice to open the blow down vessel which in turn requires to fully depressurize the reactor and all other systems connected to the reactor and to purge free of hydrocarbons the reactor, the blow down vessel, and all other systems connected to the reactor. As a consequence, the reactor system becomes contaminated with oxygen. Prior to any restart of the polyethylene plant, all plant systems must be purged free of contaminants, requiring to purge the system several times with nitrogen and subsequently ethylene. Such operations are time consuming and are usually also causing a reduction in yield during the initial startup phase which is believed to be caused by oxygen ingress during purging with nitrogen. Oxygen contamination may also be responsible for some unwanted properties such as gels, a broader molecular weight distribution, and reactor fouling.

Therefore, a continuing need exists to provide improved ethylene polymerization processes in a high-pressure polymerization system, which allow a faster restarting of the polymerization without a reduction in yield after a shutdown due to disturbances of the polymerization process such as temperature and/or pressure increase above safety thresholds, and which avoid that ethylene-based polymers of inferior properties are produced in the startup phase after a shutdown of the high-pressure polymerization system.

### SUMMARY OF THE INVENTION

The present disclosure provides a process for polymerizing ethylene, and optionally one or more comonomers, to obtain an ethylene-based polymer in a high-pressure polymerization system comprising
a) a continuously operated polymerization reactor having a reactor inlet and having a reactor outlet and
b) a reactor blow down system comprising a fluid communication system, adapted and arranged to be in fluid communication with the polymerization reactor via the fluid communication system, comprising
   b1) a reactor blow down vessel containing an aqueous quenching medium,
   b2) at least one first emergency valve arranged in the fluid communication system and adapted to open and close the fluid communication between the polymerization reactor and the reactor blow down system,
   b3) a reactor blow down dump vessel arranged and adapted to be in fluid communication with the reactor blow down vessel, and
   b4) at least one drain valve in the fluid communication between the reactor blow down vessel and the reactor blow down dump vessel adapted and arranged to open or close the fluid communication between the reactor blow down vessel and the reactor blow down dump vessel,
   wherein the reactor blow down vessel is installed above the reactor blow down dump vessel, and wherein the process comprises

A) monitoring the high-pressure polymerization system with respect to an occurrence of a disturbance, and
B) opening the at least one first emergency valve in case of a disturbance to allow the content of the polymerization system comprising polymer and gaseous components to expand into the reactor blow down vessel via the fluid communication system, wherein the at least one drain valve b4) is closed,
C) contacting said content in the reactor blow down vessel with the aqueous quenching medium to obtain an aqueous polymer slurry,
D) separating the aqueous polymer slurry and the gaseous components and
E) transferring the aqueous polymer slurry to the reactor blow down dump vessel by opening the at least one drain valve b4).

In some embodiments, the reactor blow down system further comprises a blow down separator or a combination of blow down separator elements arranged and adapted for receiving the aqueous polymer slurry from the reactor blow down dump vessel and for separating the aqueous quenching medium from the polymer of the aqueous polymer slurry, and a circulation pump arranged and adapted to return the separated aqueous quenching medium to the blow down dump vessel,
wherein the process further comprises the transfer of the aqueous polymer slurry from the reactor blow down dump vessel to the blow down separator or to the first element of the combination of blow down separator elements and the return of the separated aqueous quenching medium to the blow down dump vessel by use of the circulation pump.

In some embodiments, the reactor blow down system b) further comprises
b5) a nitrogen blanketing system,
b6) a pressure control systems and/or
b7) a fil-level control system.

In some embodiments, the high-pressure polymerization system further comprises
c) a pressure control valve,
d) a post reactor cooler, and
e) a separation vessel or a cascade of separation vessels,
wherein the post reactor cooler is in fluid communication with the continuously operated polymerization reactor via a first connecting line, wherein the separation vessel or the cascade of separation vessels is in fluid communication with the post reactor cooler via a second connecting line, and wherein the pressure control valve is adapted and arranged to control the fluid communication between the continuously operated polymerization reactor and the post reactor cooler.

In some embodiments, the high-pressure polymerization system further comprises a third connecting line between the reactor blow down vessel and the first connecting line, which branches off the first connecting line downstream of the pressure control valve, and a second emergency valve adapted and arranged to open and close the third connecting line in order to enable or prevent fluid communication with the reactor blow down vessel, and/or a fourth connecting line between the reactor blow down vessel and the second connecting line and a third emergency valve adapted and arranged to open and close the fourth connecting line in order to enable or prevent fluid communication with the reactor blow down vessel,
wherein the process further comprises after step A) and prior to step C) instead of step B)
B') opening the at least one first emergency valve and the second and/or third emergency valve in case of a disturbance to allow the content of the polymerization system comprising polymer and gaseous components to expand into the closed reactor blow down vessel via the fluid communication system and via the third and/or fourth connecting line, wherein the at least one drain valve b4) is closed.

In some embodiments, the reactor blow down vessel b1) further comprises at least one gas outlet.

In some embodiments, following an occurrence of a disturbance, the polymerization is restarted after the reactor blow down vessel has been emptied by transferring the aqueous polymer slurry to the reactor blow down dump vessel and the first emergency valve or any combination of previously open emergency valves and the drain valve b4) have been closed.

In some embodiments, the first emergency valve or any combination of previously open emergency valves are closed after step B) or B') as long as the fluid communication system, or the fluid communication system and the third connecting line and/or fourth connecting line are experiencing a positive pressure.

In some embodiments, the reactor blow down vessel and the reactor blow down dump vessel are inside a protective enclosure and/or wherein the blow down separator or the combination of blow down separator elements and/or the circulation pump or the circulation pumps are outside a protective enclosure.

In some embodiments, the at least one drain valve b4) is opened to transfer the aqueous polymer slurry to the reactor blow down dump vessel after the first emergency valve or any combination of previously open emergency valves have been closed.

The present disclosure further provides a high-pressure polymerization system comprising
a) a continuously operable polymerization reactor having a reactor inlet and having a reactor outlet and
b) a reactor blow down system adapted and arranged to be in fluid communication with the polymerization reactor via a fluid communication system comprising
   b1) a reactor blow down vessel,
   b2) at least one first emergency valve arranged in the fluid communication system and adapted to open and close the fluid communication between the polymerization reactor and the reactor blow down system,
   b3) a reactor blow down dump vessel arranged and adapted to be in fluid communication with the reactor blow down vessel,
   b4) at least one drain valve in the fluid communication between the reactor blow down vessel and the reactor blow down dump vessel adapted and arranged to close the reactor blow down vessel in order to enable or prevent fluid communication with the reactor blow down dump vessel,
   wherein the reactor blow down vessel is installed above, and being in fluid communication with the reactor blow down dump vessel.

In some embodiments, the reactor blow down system further comprises a blow down separator or a combination of blow down separator elements arranged and adapted for receiving the aqueous polymer slurry from the reactor blow down dump vessel and for separating the aqueous quenching medium from the polymer of the aqueous polymer slurry, and a circulation pump arranged and adapted to return the separated aqueous quenching medium to the blow down dump vessel.

In some embodiments, the reactor blow down system b) further comprises
b5) a nitrogen blanketing system,
b6) a pressure control systems and/or
b7) a fil-level control system.

In some embodiments, the high-pressure polymerization system further comprises
c) a pressure control valve,
d) a post reactor cooler, and
e) a separation vessel or a cascade of separation vessels,
wherein the post reactor cooler is in fluid communication with the continuously operated polymerization reactor via a first connecting line, wherein the separation vessel or the cascade of separation vessels is in fluid communication with the post reactor cooler via a second connecting line, and wherein the pressure control valve is adapted and arranged to control the fluid communication between the continuously operated polymerization reactor and the post reactor cooler.

In some embodiments, the high-pressure polymerization further comprises a third connecting line between the reactor blow down vessel and the first connecting line which branches off the first connecting line downstream of the pressure control valve and a second emergency valve adapted and arranged to open and close the third connecting line in order to enable or prevent fluid communication with the reactor blow down dump vessel, and/or a fourth connecting line between the reactor blow down vessel and the second connecting line and a third emergency valve adapted and arranged to open and close the fourth connecting line in order to enable or prevent fluid communication with the reactor blow down dump vessel.

### BRIEF DESCRIPTION OF THE DRAWINGS

To assist those of ordinary skill in the relevant art in making and using the subject matter hereof, reference is made to the appended drawings, wherein:
- Figure 1: shows schematically a set-up for carrying out the process of the present disclosure, and
- Figure 2: depicts a schematic representation of an of the reactor blow down system of a continuously operable polymerization reactor.

### DETAILED DESCRIPTION OF THE INVENTION

The process of the present disclosure relates to a process for polymerizing ethylene, and optionally one or more comonomers, to obtain an ethylene-based polymer in a high-pressure polymerization system allowing to significantly reduce the duration of reactor shutdowns. Accordingly, the effective operation time of a plant for the polymerization or copolymerization of ethylenically unsaturated monomers can be significantly increased.

It should be understood that the use of "and/or" is defined inclusively, such that the term "a and/or b" should be read to include the sets: "a and b", "a or b", "a", "b". Preferably, "and" in most cases "a and/or b" relates to two entities "a" and "b", wherein at least one of said entities is present in the embodiment described.

It should be noted that terms as "above" and "top" refer to the arrangement of elements in the high-pressure polymerization system as assembled and as used and in accordance with the gravitational force of earth. Thus a bottom section is closer to the center of earth than a top section. This does not preclude a non-usable stage, wherein the arrangement deviates, e.g. during transportation of a system to the installation site.

The present disclosure relates to a process for polymerizing ethylene, and optionally one or more comonomers, to obtain an ethylene-based polymer in a high-pressure polymerization system comprising a continuously operated polymerization reactor having an reactor inlet and having an reactor outlet, which can also be a combination of polymerization reactors. In a preferred embodiment of the present disclosure, the monomers are brought to the polymerization pressure by one or more compressors in a sequence of compression stages, the compressed monomers are optionally passed through a pre-heater or a pre-cooler and are then transferred into the polymerization reactor at the reactor inlet. In addition, a reaction mixture obtained by the polymerization leaves the reactor at the reactor outlet through a pressure control valve and is optionally cooled by an post reactor cooler. Subsequently, the reaction mixture is separated into polymeric and gaseous components in two or more stages, where the gaseous components separated off in a first stage at an absolute pressure of from 15 MPa to 50 MPa are recycled to the one or more compressors via a high-pressure gas recycle line and the gaseous components separated off in a second stage at an absolute pressure in the range of from 0.1 MPa to 0.5 MPa are recycled to the first stage of the sequence of compression stages via a low-pressure gas recycle line, and the polymeric components obtained by the polymerization are transformed into pellets.

The polymerization is preferably a homopolymerization of ethylene or a copolymerization of ethylene with one or more other monomers, provided that these monomers are free-radically copolymerizable with ethylene under high pressure. Examples of copolymerizable monomers for use in the present technology are α,β-unsaturated C₃-C₈-carboxylic acids, derivatives of α,β-unsaturated C₃-C₈-carboxylic acids, e.g. unsaturated C₃-C₁₅-carboxylic esters or anhydrides, and 1-olefins. In addition, vinyl carboxylates, such as vinyl acetate, can be used as comonomers. Propene, 1-butene, 1-hexene, acrylic acid, n-butyl acrylate, tert-butyl acrylate, 2-ethylhexyl acrylate, vinyl acetate or vinyl propionate are particularly suitable as comonomer.

In the case of copolymerization, the proportion of comonomer or comonomers in the reaction mixture is from 1 to 50% by weight, preferably from 3 to 40% by weight, based on the amount of monomers, i.e. the sum of ethylene and other monomers. Depending on the type of comonomer, it can be preferred to feed the comonomers at more than one point to the reactor set-up. Preferably the comonomers are fed to the suction side of the secondary compressor.

For the purposes of the present disclosure, polymers or polymeric materials are substances which are made up of at least two monomer units. The polymers or polymeric materials are preferably low density polyethylenes having an average molecular weight Mₙ of more than 20 000 g/mole. The term "low density polyethylene" (LDPE) includes ethylene homopolymers and ethylene copolymers. The process of the present disclosure can also be employed in the preparation of oligomers, waxes and polymers having a molecular weight Mn of less than 20 000 g/mole.

The process of the present disclosure is preferably a radical polymerization carried out in the presence of free-radical polymerization initiators. Possible initiators for starting the polymerization in the respective reaction zones are in general any substances that can produce radical species under the conditions in the polymerization reactor, for example, oxygen, air, azo compounds or peroxidic polymerization initiators. In a preferred embodiment of the disclosure, the polymerization is carried out by using oxygen, either fed in the form of pure O₂ or as air. In case of initiating the polymerization with oxygen, the initiator is normally first mixed with the ethylene feed and then fed to the reactor. In such a case, it is not only possible to feed a stream comprising monomer and oxygen to the beginning of the polymerization reactor but also to one or more points along the reactor creating two or more reaction zones. Initiation using organic peroxides or azo compounds also represents a preferred embodiment of the present disclosure. It is possible to use either individual initiators or preferably mixtures of various initiators. A large range of initiators, in particular peroxides, are commercially available, for example the products of Akzo Nobel offered under the trade names Trigonox^{®} or Perkadox^{®}.

In the polymerization, the molecular weight of the polymers to be prepared can as usual be altered by the addition of modifiers which act as chain-transfer agents. Examples of modifiers for use in the present technology are hydrogen, aliphatic and olefinic hydrocarbons, e.g. propane, butane, pentane, hexane, cyclohexane, propene, 1-butene, 1-pentene or 1-hexene, ketones such as acetone, methyl ethyl ketone (2-butanone), methyl isobutyl ketone, methyl isoamyl ketone, diethyl ketone or diamyl ketone, aldehydes such as formaldehyde, acetaldehyde or propionaldehyde and saturated aliphatic alcohols such as methanol, ethanol, propanol, isopropanol or butanol. Particular preference is given to using saturated aliphatic aldehydes, in particular propionaldehyde or 1-olefins such as propene, 1-butene or 1-hexene, or aliphatic hydrocarbons such as propane.

The high polymerization is preferably carried out at pressures of from 110 MPa to 500 MPa, with pressures of from 160 MPa to 350 MPa being more preferred and pressures of from 200 MPa to 330 MPa being particularly preferred for polymerization in a tubular reactor and with pressures of from 110 MPa to 300 MPa being more preferred and pressures of from 120 MPa to 280 MPa being particularly preferred for polymerization in an autoclave reactor. The polymerization temperatures are preferably in the range of from 100°C to 350°C, and more preferably in the range of from 180°C to 340°C and particularly preferred from 200°C to 330°C for polymerization in a tubular reactor and more preferably in the range of from 110°C to 320°C and particularly preferred from 120°C to 310°C for polymerization in an autoclave reactor.

The polymerization can be carried out with all types of high-pressure reactors appropriate for high-pressure polymerization. High-pressure reactors for use in the present technology are, for example, tubular reactors or autoclave reactors. Preferably the polymerization is carried out in one or more tubular reactors or one or more autoclave reactors or combinations of such reactors. In particularly preferred embodiments of the present disclosure, the polymerization reactor is a tubular reactor.

Common high-pressure autoclave reactors are stirred reactors and have a length-to-diameter ratio in a range from 2 to 30, preferably from 2 to 20. Such autoclave reactors have one or more reaction zones, preferably from 1 to 6 reaction zones and more preferably from 1 to 4 reaction zones. The number of reaction zones depends on the number of agitator baffles which separate individual mixed zones within the autoclave reactor. In high-pressure polymerization systems in which the polymerization or the first polymerization is carried out in an autoclave reactor, i.e. in high-pressure polymerization system in which the only polymerization reactor is an autoclave reactor or high-pressure polymerization system in which the first reactor of a reactor cascade is an autoclave reactor, the reaction mixture coming from the compressors is usually first passed through a pre-cooler before entering the autoclave reactor.

Appropriate tubular reactors are basically long, thick-walled pipes, which are usually from about 0.5 km to 4 km, preferably from 1 km to 3 km and especially from 1.5 km to 2.5 km long. The inner diameter of the pipes is usually in the range of from about 30 mm to 120 mm and preferably from 60 mm to 100 mm. Such tubular reactors have preferably a length-to-diameter ratio of greater than 1000:1, preferably from 10000:1 to 40000:1 and especially from 25000:1 to 35000:1.

Preferred tubular reactors have at least two reaction zones, preferably from 2 to 6 reaction zones and more preferably from 2 to 5 reaction zones. The number of reaction zones is given by the number of feeding points for the initiator. Such a feeding point can, for example, be an injection point for a solution of azo compounds or organic peroxides. Fresh initiator is added to the reactor, where the initiator decomposes into free radicals and initiates further polymerization. The generated heat of the reaction raises the temperature of the reaction mixture, since more heat is generated than can be removed through the walls of the tubular reactor. The rising temperature increases the rate of decomposition of the free-radical initiators and accelerates polymerization until essentially all of the free-radical initiator is consumed. Thereafter, no further heat is generated and the temperature decreases again since the temperature of the reactor walls is lower than that of the reaction mixture. Accordingly, the part of the tubular reactor downstream of an initiator feeding point in which the temperature rises is the reaction zone, while the part thereafter, in which the temperature decreases again, is predominantly a cooling zone. The amount and nature of added free-radical initiators determines how much the temperature rises and accordingly allows for adjusting that value. Normally, the temperature rise is set to be in the range of from 70°C to 170°C in the first reaction zone and 50°C to 130°C for the subsequent reaction zones depending on the product specifications and the reactor configuration. Preferably, the tubular reactor is equipped with cooling jackets for removing the heat of the reaction. More preferably, all reaction zones of the tubular reactor are cooled by cooling jackets.

The compression of the reaction gas composition to the polymerization pressure is carried out by one or more compressors in a sequence of compression stages, where preferably a primary compressor first compresses the reaction gas composition to a pressure of from 10 MPa to 50 MPa and a secondary compressor further compresses the reaction gas composition to the polymerization pressure of from 110 MPa to 500 MPa. Preferably the primary compressor and the secondary compressor are multistage compressors. It is further possible to separate one or more stages of one or both of these compressors and divide the stages into separated compressors. However, usually a series of one primary compressor and one secondary compressor is used for compressing the reaction gas composition to the polymerization pressure. In such cases, sometimes the whole primary compressor is designated as primary compressor. However, it is also common to designate the one or more first stages of the primary compressor, which compress the recycle gas from the low- pressure product separator to the pressure of the fresh ethylene feed, as the booster compressor and then only the one or more subsequent stages as the primary compressor, although the booster compressor and the subsequent stages are all part of one apparatus.

In a preferred embodiment of the present disclosure, the high-pressure polymerization system comprises a pre-heater upstream of a tubular reactor for heating the reaction gas composition to a temperature capable of initiating the polymerization. In a preferred embodiment of the present disclosure the entire reaction gas composition provided by the secondary compressor is fed via a pre-heater to the inlet of the tubular reactor. In another preferred embodiment of the present disclosure only a part of the reaction gas composition compressed by the secondary compressor is fed via the pre-heater to the inlet of the tubular reactor and the remainder of the reaction gas composition compressed by the secondary compressor is fed as one or more side streams to the tubular reactor downstream of the inlet of the tubular reactor. In such a set-up preferably from 30 to 90% by weight, more preferably from 40 to 70% by weight of the reaction gas composition provided by the secondary compressor are fed to the inlet of the tubular reactor and from 10 to 70% by weight, more preferably from 30 to 60% by weight of the reaction gas composition provided by the secondary compressor are fed as one or more side streams to the tubular reactor downstream of the inlet of the tubular reactor.

The high-pressure polymerization system for carrying out the polymerization of the present disclosure preferably comprises, besides the polymerization reactor and the rector blow down system, two or more gas recycle lines for recycling unreacted monomers into the polymerization process. The reaction mixture obtained in the polymerization reactor is transferred to a first separation vessel, frequently called high-pressure product separator, and separated into a gaseous fraction and a liquid fraction at an absolute pressure of from 15 MPa to 50 MPa. The gaseous fraction withdrawn from the first separation vessel is fed via a high-pressure gas recycle line to the suction side of the secondary compressor. In the high- pressure gas recycle line, the gas is usually purified by several purification steps for removing undesired components such as entrained polymer or oligomers. The liquid fraction withdrawn from the first separation vessel, which usually still comprises dissolved monomers such as ethylene and comonomers in an amount of 20 to 40% of weight, is transferred to a second separation vessel, frequently called low-pressure product separator, and further separated, at reduced pressure, usually at an absolute pressure in the range of from 0.1 MPa to 0.5 MPa, in polymeric and gaseous components. The gaseous fraction withdrawn from the second separation vessel is fed via a so-called low-pressure gas recycle line to the primary compressor, preferably to the foremost of the stages. Also the low-pressure gas recycle line usually comprises several purification steps for purifying the gas from undesired components. The high-pressure polymerization system can further comprise additional separation steps for separating additional gaseous fractions from the reaction mixtures and additional gas recycle lines for feeding such additional gaseous fractions comprising not reacted monomers to one of the compressors, for example in-between the first separation step and the second separation step operating at an intermediate pressure.

Preferably, the recycled gas coming from the low-pressure gas recycle line is compressed by the first stages of the primary compressor to the pressure of the fresh feed of ethylenically unsaturated monomers, preferably ethylene, and thereafter combined with the fresh gas feed and the combined gases are further compressed in the primary compressor to the pressure of from 10 MPa to 50 MPa. Preferably the primary compressor comprises five or six compression stages, two or three before adding the fresh gas and two or three after adding the fresh gas. The secondary compressor has preferably two stages; a first stage, which compresses the gas to a pressure in the range from 50 MPa to 150 MPa, and a second stage, which further compresses the gas to the final polymerization pressure.

The pressure within the polymerization reactor is preferably controlled by a pressure control valve, which is arranged at the outlet of the polymerization reactor and through which the reaction mixture leaves the reactor. The pressure control valve can be any valve arrangement which is suitable for reducing the pressure of the reaction mixture leaving the reactor to the pressure within the first separation vessel.

In a preferred embodiment of the present disclosure, the high-pressure polymerization system comprises a post reactor cooler downstream of the polymerization reactor for cooling the reaction mixture. The post reactor cooler can be arranged upstream of the pressure control valve or the post reactor cooler can be arranged downstream of the pressure control valve. Preferably, the post reactor cooler is arranged downstream of the pressure control valve.

Preferred polymerization reactors are located in a chamber having a surrounding protective wall.

The polymeric components obtained by the polymerization are finally transformed into pellets, normally by apparatuses like extruders or granulators. Preferably, the ethylene-based polymer produced by the process is a LDPE having a density in the range from 0.910 g/cm³ to 0.940 g/cm³.

The process of the present disclosure is characterized in that the high-pressure polymerization system comprises, besides
a) a continuously operated polymerization reactor having a reactor inlet and having a reactor outlet,
b) a reactor blow down system comprising a fluid communication system, adapted and arranged to be in fluid communication with the polymerization reactor via the fluid communication system, comprising
   b1) a reactor blow down vessel containing an aqueous quenching medium,
   b2) at least one first emergency valve, preferably a multitude of first emergency valves distributed over the length of the operated high-pressure tubular reactor, and arranged in the fluid communication system and adapted to open and close the fluid communication between the polymerization reactor and the reactor blow down system,
   b3) a reactor blow down dump vessel arranged and adapted to be in fluid communication with the reactor blow down vessel, and
   b4) at least one drain valve in the fluid communication between the reactor blow down vessel and the reactor blow down dump vessel adapted and arranged to open or close the fluid communication between the reactor blow down vessel and the reactor blow down dump vessel,
   wherein the reactor blow down vessel is installed above the reactor blow down dump vessel, and wherein the process comprises

A) monitoring the high-pressure polymerization system with respect to an occurrence of a disturbance, and
B) opening the at least one first emergency valve in case of a disturbance to allow the content of the polymerization system comprising polymer and gaseous components to expand into the reactor blow down vessel via the fluid communication system, wherein the at least one drain valve b4) is closed,
C) contacting said content in the reactor blow down vessel with the aqueous quenching medium to obtain an aqueous polymer slurry,
D) separating the aqueous polymer slurry and the gaseous components and
E) transferring the aqueous polymer slurry to the reactor blow down dump vessel by opening the at least one drain valve b4).

According to the process of the present disclosure, the high-pressure polymerization system is monitored with respect to an occurrence of a disturbance. In case of a disturbance, the least one first emergency valve is opened and the content of the polymerization system comprising polymer and gaseous components is expand into the reactor blow down vessel. In this way, the high-pressure polymerization is interrupted in a controlled manner. Accordingly, a disturbance in the context of the present disclosure is any deviation of the normal polymerization conditions which is deemed significant enough that the polymerization has to be terminated. The monitoring of the high-pressure polymerization system occurs by measuring various parameters with respect to the conditions of the high-pressure polymerization system. These parameters include pressures and temperatures at various positions of the polymerization system, filling levels of vessels, positions of valves, hydrocarbon concentrations in the surrounding of the high-pressure polymerization system and vibrations in the polymerization system. If one of these parameter deviates significantly from the normal values, for example by differing more than 10% from a usually measured value, an occurrence of a disturbance is established and step B) of the process is carried out.

In a preferred embodiment of the present disclosure, the at least one drain valve b4) is remotely operated or operable.

In another preferred embodiment, the at least one drain valve b4) is opened to transfer the aqueous polymer slurry to the reactor blow down dump vessel after the first emergency valve or any combination of previously open emergency valves have been closed.

Preferably, the reactor blow down system used in the process of the present disclosure further comprises a blow down separator or a combination of blow down separator elements arranged and adapted for receiving the aqueous polymer slurry from the reactor blow down dump vessel and for separating the aqueous quenching medium from the polymer of the aqueous polymer slurry, and a circulation pump arranged and adapted to return the separated aqueous quenching medium to the blow down dump vessel, wherein the process further comprises the transfer of the aqueous polymer slurry from the reactor blow down dump vessel to the blow down separator or to the first element of the combination of blow down separator elements and the return of the separated aqueous quenching medium to the blow down dump vessel by use of the circulation pump. The transfer of the aqueous polymer slurry from the reactor blow down dump vessel to the blow down separator or to the first element of the combination of blow down separator elements may occur by gravity or by a pump which may be the circulation pump, which also returns the separated aqueous quenching medium to the blow down dump vessel; or the pump, which transfer the aqueous polymer slurry from the reactor blow down dump vessel to the blow down separator or to the first element of the combination of blow down separator elements, is a different pump than the pump, which returns the separated aqueous quenching medium to the blow down dump vessel. In preferred embodiments of the present disclosure, the separation of the aqueous polymer slurry into an aqueous phase and wet polymer occurs by a combination of blow down separator elements. Preferably, the combination of blow down separator elements is a combination of two blow down separator elements, where the first element is a buffer vessel for holding the aqueous polymer slurry in a suitable spatial arrangement to the second element combination of blow down separator elements and the second element is a separating devices such as a centrifuge or a sieving devise like an inclined sieve.

Preferably, the reactor blow down vessel b1) further comprises at least one gas outlet for removing the gaseous components having been separated from the aqueous polymer slurry. Preferably, the reactor blow down vessel is nitrogen blanketed although being open to the atmosphere.

In preferred embodiments of the present disclosure, the reactor blow down system b) used in the process of the present disclosure further comprises
b5) a nitrogen blanketing system, preferably nitrogen blanketing the reactor blow down vessel and nitrogen blanketing the reactor blow down dump vessel,
b6) a pressure control system, preferably controlling the pressure of the reactor blow down dump vessel, and/or
b7) a fil-level control system, preferably controlling the filling level of the reactor blow down vessel and controlling the filling level of the reactor blow down dump vessel.

In other preferred embodiments of the present disclosure, the high-pressure polymerization system used in the process of the present disclosure further comprises
c) a pressure control valve,
d) a post reactor cooler, and
e) a separation vessel or a cascade of separation vessels, preferably a first separation vessel and a second separation vessel in series,
and the post reactor cooler is in fluid communication with the continuously operated polymerization reactor via a first connecting line, wherein the separation vessel or the cascade of separation vessels is preferably also in fluid communication with the post reactor cooler via a second connecting line, and wherein the pressure control valve is adapted and arranged to control the fluid communication between the continuously operated polymerization reactor and the post reactor cooler. In such embodiments, the high-pressure polymerization system preferably further comprises a third connecting line between the reactor blow down vessel and the first connecting line, which branches off the first connecting line downstream of the pressure control valve, and a second emergency valve adapted and arranged to open and close the third connecting line in order to enable or prevent fluid communication with the reactor blow down vessel , and/or a fourth connecting line between the reactor blow down vessel and the second connecting line and a third emergency valve adapted and arranged to open and close the fourth connecting line in order to enable or prevent fluid communication with the reactor blow down vessel, wherein the process further comprises after step A) and prior to step C) instead of step B)
B') opening the at least one first emergency valve and the second and/or third emergency valve in case of a disturbance to allow the content of the polymerization system comprising polymer and gaseous components to expand into the closed reactor blow down vessel via the fluid communication system and via the third and/or fourth connecting line, wherein the at least one drain valve b4) is closed.

In preferred embodiments of the present disclosure, following an occurrence of a disturbance, the polymerization is restarted after the reactor blow down vessel has been emptied by transferring the aqueous polymer slurry to the reactor blow down dump vessel and the first emergency valve or any combination of previously open emergency valves and the drain valve b4) have been closed.

In preferred embodiments of the present disclosure, the first emergency valve or any combination of previously open emergency valves are closed after step B) or B') as long as the fluid communication system, or the fluid communication system and the third connecting line and/or fourth connecting line are experiencing a positive pressure.

In preferred embodiments of the present disclosure, the reactor blow down vessel and the reactor blow down dump vessel are inside a protective enclosure, frequently called "reactor bay", and/or wherein the blow down separator or the combination of blow down separator elements and/or the circulation pump or the circulation pumps are outside a protective enclosure.

In preferred embodiments of the present disclosure, the at least one drain valve b4) is opened, preferably remotely opened, to transfer the aqueous polymer slurry to the reactor blow down dump vessel after the first emergency valve or any combination of previously open emergency valves have been closed.

The aqueous quenching medium in most cases is water. In some cases, for example for the production of ethylene copolymers, the aqueous quenching medium in addition to water also comprises at least one polymerization inhibitor such as hydroquinone or pH buffer agents. Suitable buffer agents comprise for example phosphate buffers, e.g. obtained by mixing sodium hydrogen phosphate and sodium hydroxide.

The process of the present disclosure also relates to a high-pressure polymerization system comprising
a) a continuously operable polymerization reactor having a reactor inlet and having a reactor outlet and
b) a reactor blow down system adapted and arranged to be in fluid communication with the polymerization reactor via a fluid communication system comprising
   b1) a reactor blow down vessel,
   b2) at least one first emergency valve arranged in the fluid communication system and adapted to open and close the fluid communication between the polymerization reactor and the reactor blow down system,
   b3) a reactor blow down dump vessel arranged and adapted to be in fluid communication with the reactor blow down vessel,
   b4) at least one drain valve in the fluid communication between the reactor blow down vessel and the reactor blow down dump vessel adapted and arranged to close the reactor blow down vessel in order to enable or prevent fluid communication with the reactor blow down dump vessel,
   wherein the reactor blow down vessel is installed above, and being in fluid communication with the reactor blow down dump vessel. Preferably, the reactor blow down system further comprises a blow down separator or a combination of blow down separator elements arranged and adapted for receiving the aqueous polymer slurry from the reactor blow down dump vessel and for separating the aqueous quenching medium from the polymer of the aqueous polymer slurry, and a circulation pump arranged and adapted to return the separated aqueous quenching medium to the blow down dump vessel.

In preferred embodiments of the present disclosure, the reactor blow down system b) of the high-pressure polymerization system further comprises
b5) a nitrogen blanketing system, preferably nitrogen blanketing the reactor blow down vessel and nitrogen blanketing the reactor blow down dump vessel,
b6) a pressure control system, preferably controlling the pressure of the reactor blow down dump vessel, and/or
b7) a fil-level control system, preferably controlling the filling level of the reactor blow down vessel and controlling the filling level of the reactor blow down dump vessel.

In other preferred embodiments of the present disclosure, the high-pressure polymerization system further comprises
c) a pressure control valve,
d) a post reactor cooler, and
e) a separation vessel or a cascade of separation vessels, preferably a first separation vessel and a second separation vessel in series,
and the post reactor cooler is in fluid communication with the continuously operated polymerization reactor via a first connecting line, wherein the separation vessel or the cascade of separation vessels is preferably also in fluid communication with the post reactor cooler via a second connecting line, and wherein the pressure control valve is adapted and arranged to control the fluid communication between the continuously operated polymerization reactor and the post reactor cooler. In such embodiments, the high-pressure polymerization system preferably further comprises a third connecting line between the reactor blow down vessel and the first connecting line, which branches off the first connecting line downstream of the pressure control valve, and a second emergency valve adapted and arranged to open and close the third connecting line in order to enable or prevent fluid communication with the reactor blow down dump vessel , and/or a fourth connecting line between the reactor blow down vessel and the second connecting line and a third emergency valve adapted and arranged to open and close the fourth connecting line in order to enable or prevent fluid communication with the reactor blow down dump vessel.

Further features and advantages of the present disclosure will become apparent from the following description, in which exemplary embodiments of the disclosure are explained with reference to schematic drawings, by way of example and without limiting the invention.

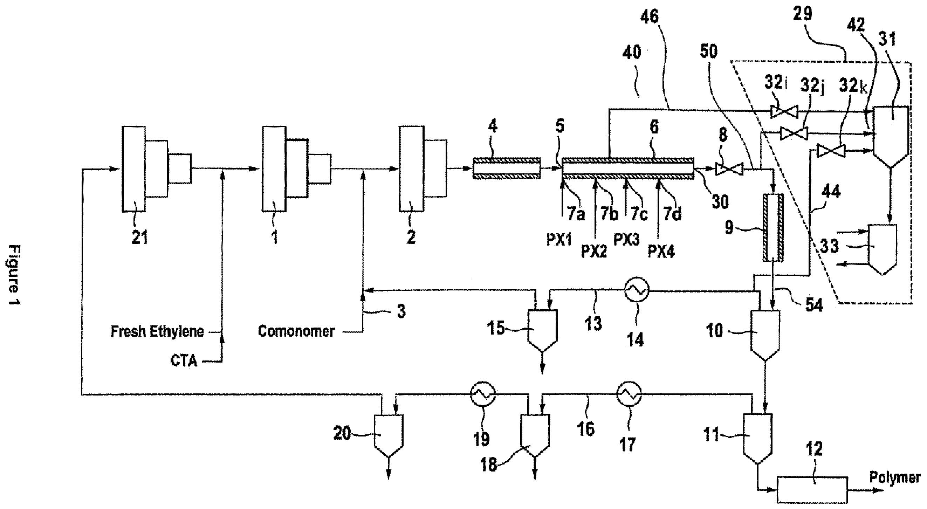

Figure 1 shows schematically a set-up of a high-pressure polymerization system for polymerizing ethylenically unsaturated monomers in a high-pressure polymerization system comprising a continuously operated tubular polymerization reactor (6) and the reactor blow down system (29) of the process and the high-pressure polymerization system of the present disclosure.

The fresh ethylene, which depending on the supply conditions may be under a pressure of for example 1.7 MPa or 12 MPa, is firstly compressed to a significantly higher pressure, e.g. of about 30 MPa by means of a primary compressor (1) and then compressed to the reaction pressure of about 300 MPa using a secondary compressor (2). Chain transfer agents (CTA) may in one embodiment be added to primary compressor (1) together with the fresh ethylene. Comonomer may be added upstream of the secondary compressor (2) via line (3). The reaction mixture leaving the primary compressor (2) is fed to pre-heater (4), where the reaction mixture is preheated to the reaction start temperature, e.g. of from about 120°C to 220°C, and then conveyed to the inlet (5) of the tubular reactor (6).

The tubular reactor (6) is basically a long, thick-walled pipe with cooling jackets to remove the liberated heat of reaction from the reaction mixture by means of a coolant circuit (not shown).

The exemplary embodiment of a tubular reactor (6) as shown in Figure 1 has four spatially separated initiator injection points (7a), (7b), (7c), and (7d) for feeding initiators or initiator mixtures PX1, PX2, PX3 and PX4 to the reactor and accordingly also four reaction zones. By feeding suitable free-radical initiators, which decompose at the temperature of the reaction mixture, to the tubular reactor the polymerization reaction starts.

The reaction mixture leaves the tubular reactor (6) through pressure control valve (8) being incorporated in the first connecting line (50) and passes a post reactor cooler (9). Thereafter, the cooled reaction mixture is transferred via a second connecting line (54) to a first separation vessel (10). By use of this first separation vessel (10) and of a second separation vessel (11), the resulting polymer is separated off from unreacted ethylene and other low molecular weight compounds (monomers, oligomers, polymers, additives, solvent, etc.), discharged and pelletized via an extruder and granulator (12).

The ethylene and comonomers which have been separated off in the first separation vessel (10) are fed back to the inlet end of the tube reactor (6) in the high-pressure circuit (13), e.g. at about 30 MPa. In the high-pressure circuit (13), the gaseous material separated from the reaction mixture is first freed from other constituents in at least one purification stage and then added to the monomer stream between primary compressor (1) and secondary compressor (2). Figure 1 shows one purification stage consisting of a heat exchanger (14) and a separator (15). It is however also possible to use a plurality of purification stages, e.g. arranged in parallel. The high-pressure circuit (13) usually separates waxes.

The ethylene which has been separated off in the second separation vessel (11), which further comprises, inter alia, the major part of the low molecular weight products of the polymerization (oligomers) and the solvent, is worked up in the low-pressure circuit (16) at an absolute pressure of, e.g., from about 0.1 to 0.5 MPa in a plurality of separators with a heat exchanger being installed between each of the separators. Figure 1 shows two purification stages consisting of heat exchangers (17) and (19) and separators (18) and (20). It is however also possible to use only one purification stages or preferably more than two purification stages. The low-pressure circuit (16) usually separates oils and waxes.

The ethylene which has passed the low-pressure circuit (16) is fed to a booster compressor (21), compressed to a pressure of about 4 MPa and then conveyed to primary compressor (1). Booster compressor (21) and primary compressor (1) are preferably part of one low-pressure compressor, i.e. of one apparatus powered by one motor.

The high-pressure polymerization system also comprises a reactor blow down system (29) comprising a reactor blow down vessel (31). The reactor blow down system (29) can be brought in fluid communication which the polymerization reactor (6) by use of one or more connecting lines (46) having a first emergency valves (32i), a third connecting line (42) having a second disturbance valve (32j) and/or a fourth connecting line (44) having a third disturbance valve (32k). The reactor blow down vessel (31) is installed above a reactor blow down dump vessel (33).

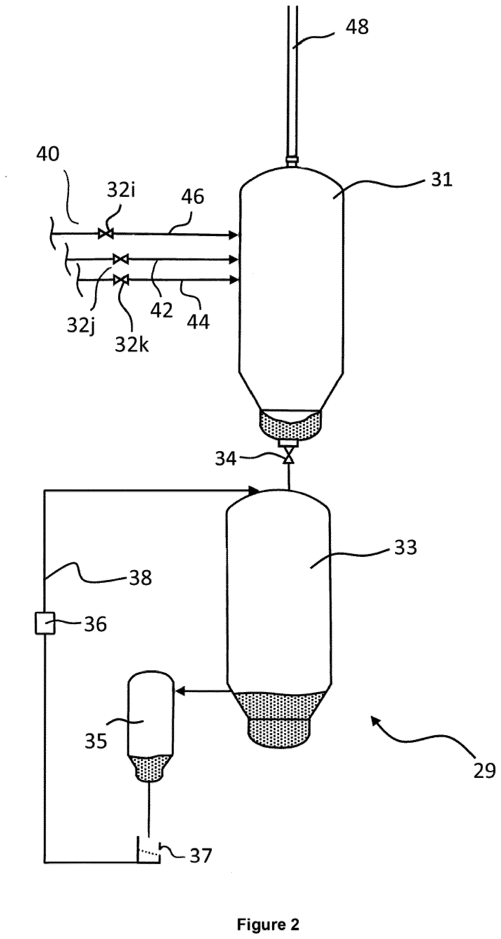

Details of an embodiment of the reactor blow down system (29) are shown in Figure 2. The embodiment depicted in Figure 2 has a reactor blow down vessel (31); a fluid communication system (40) comprising a first emergency valve (32i) incorporated into a connecting line (46), a second emergency valve (32j) incorporated into a third connecting line (42), a third emergency valve (32k) incorporated into a fourth connecting line (44); and a reactor blow down dump vessel (33). The first emergency valve (32i) can also be considered to be a placeholder for a multitude of first emergency valves(32i), each being incorporated into a separate connecting line (46) and each being part of the fluid communication system (40). In the embodiment of the reactor blow down system (29) depicted in Figure 2, the connecting line (46), the third connecting line (42) and the fourth connecting line (44) all lead into the upper half of the side wall of the reactor blow down vessel (31).

In the embodiment depicted in Figure 2, the reactor blow down vessel (31) is located on top of the reactor blow down dump vessel (33) and is in fluid communication therewith. In case of an observed disturbance, for example when the pressure within the high-pressure polymerization system increases above a pre-determined pressure value, which can, for example, be observed by pressure sensors, the first emergency valve (32i) is opened and the content of the polymerization reactor (6) is expanded into the reactor blow down vessel (31) containing an aqueous quenching medium. If needed, e.g. for process reasons, also the second emergency valve (32j) and the third emergency valve (32k) are opened and the content of the connecting line (46) starting from the outlet (30) of the polymerization reactor (6) and that of the post reactor cooler (9) are also expanded into the reactor blow down vessel (31). In some cases, the first emergency valve (32i), the second emergency valve (32j) and the third disturbance (32k) valve are simultaneously opened in case of a disturbance.

By use of a aqueous quenching medium, the polymer obtained in the polymerization reactor is solidified, usually in the form of flakes. Concomitantly, the temperature of both of the polymeric and the gaseous components is reduced. In the reactor blow down vessel (31), the water/polymer mixture and the gaseous components can be separated by releasing the gaseous components via a respective outlet or vent (48). After release of the gaseous components, the remaining water/polymer mixture is transferred into the reactor blow down dump vessel (33) by gravity upon opening of the drain valve (34). Once the reactor blow down vessel (31) has been emptied and the first emergency valve (32i), the second emergency valve (32j) and the third disturbance (32k) have been closed, polymerization can restart instantaneously. This is also due to the fact that during shut-down both the polymerization system as well as the reactor blow down system (29) are kept under an ethylene atmosphere. Here, in some preferred cases, the first emergency valve (32i), the second emergency valve (32j) and the third disturbance (32k) are closed as long as overpressure can be observed at these valves or in the respective connecting lines. The drain valve (34) between the reactor blow down vessel (31) and the reactor blow down dump vessel (33) can be remotely opened. And, after dumping the content of the reactor blow down vessel (31) into the reactor blow down dump vessel (33), the drain valve (34) is closed. The successful transfer of the polymer/water slurry can be surveyed by a camera system (not shown), mounted on the reactor blow down vessel (31).

According to the embodiment depicted in Figure 2, the reactor blow down system (29) further comprises a combination of blow down separator elements (35) and (37) and a circulation pump (36) by use of which the aqueous quenching medium separated from the water/polymer slurry is returned to the reactor blow down dump vessel (33). The first element (35) of the combination of blow down separator elements is a buffer vessel to which the content of reactor blow down dump vessel (33) can be transferred by gravity, in some cases supported by nitrogen. The second element (37) of the combination of blow down separator elements is an inclined sieve which is used for retaining the polymer. Also the transfer of the water/polymer slurry from buffer vessel (35) to sieve (37) occurs by gravity. The aqueous phase separated from the water/polymer slurry by sieve (37) is then conveyed via line (38) by use of circulation pump (36) to the reactor blow down dump vessel (33). This circulation of water is kept in operation until all polymer waste from the reactor blow down dump vessel (33) is removed and was finally retained by inclined sieve (37). For safe operation of the reactor blow down system (29), use can be made of, for example, nitrogen blanketing systems, pressure control systems and/or lever supervision systems (not shown).

Surprisingly it was found that in case of a disturbance or even an emergency, e.g. due to the reactor pressure and/or the reactor temperature being above safe threshold values the polymerization reaction can be interrupted in order to reduce pressure and/or temperature without the need to open the high-pressure polymerization system. It has been found that the reactor vessel, including the secondary compressor, and in particular also the closable reactor blow down system can be kept under an ethylene atmosphere during the entire shutdown and restart procedure and contamination of the reactor system with oxygen can be avoided. This is facilitated by closing the first emergency valve or any combination of previously open emergency valves after step B) or B') as long as the fluid communication system, or the fluid communication system and the third connecting line and/or fourth connecting line are experiencing a positive pressure. Different from prior art disposal systems, the steps of depressurizing the polymerization reactor and purging the blow down vessel and the polymerization reactor both prior and after emptying the blow down vessel become unnecessary and manual operator intervention is not needed. With the process of the present disclosure, the content of the polymerization system is expanded into the reactor blow down vessel and contacted with the aqueous quenching system. In this manner, the pressure in the continuous high-pressure polymerization system can be rapidly reduced, e.g. within a minute or even less from about or above 200 MPa to 0.1 MPa. While the gaseous components are released from this vessel, the water/polymer mixture is, in some cases automatically, transferred into the reactor blow down dump vessel. It has also surprisingly been found that the polymerization can restart immediately after the reactor blow down vessel has been emptied, i.e. after a much shorter time period than according to established pressure reducing processes.

It is also a surprising finding that with the process and the high-pressure polymerization system of the present disclosure, the reactor can be automatically depressurized by automatically opening the least one emergency valve in case of any disturbance or emergency thereby putting the reactor into safe condition. That is, polymerization can not only be stopped safely in case of an emergency like fire, explosion, earthquake or polyethylene decomposition but also if deviations, i.e. disturbances, from the standard operating conditions, e.g. by exceeding pre-defined threshold values, are detected.

Other features, advantages and embodiments of the subject matter of the present disclosure disclosed herein will be readily apparent to those exercising ordinary skill after reading the foregoing disclosure.

## Claims

1. A process for polymerizing ethylene, and optionally one or more comonomers, to obtain an ethylene-based polymer in a high-pressure polymerization system comprising
a) a continuously operated polymerization reactor having a reactor inlet and having a reactor outlet and
b) a reactor blow down system comprising a fluid communication system, adapted and arranged to be in fluid communication with the polymerization reactor via the fluid communication system, comprising
b1) a reactor blow down vessel containing an aqueous quenching medium,
b2) at least one first emergency valve arranged in the fluid communication system and adapted to open and close the fluid communication between the polymerization reactor and the reactor blow down system,
b3) a reactor blow down dump vessel arranged and adapted to be in fluid communication with the reactor blow down vessel, and
b4) at least one drain valve in the fluid communication between the reactor blow down vessel and the reactor blow down dump vessel adapted and arranged to open or close the fluid communication between the reactor blow down vessel and the reactor blow down dump vessel,
wherein the reactor blow down vessel is installed above the reactor blow down dump vessel, and
wherein the process comprises
A) monitoring the high-pressure polymerization system with respect to an occurrence of a disturbance, and
B) opening the at least one first emergency valve in case of a disturbance to allow the content of the polymerization system comprising polymer and gaseous components to expand into the reactor blow down vessel via the fluid communication system, wherein the at least one drain valve b4) is closed,
C) contacting said content in the reactor blow down vessel with the aqueous quenching medium to obtain an aqueous polymer slurry,
D) separating the aqueous polymer slurry and the gaseous components and
E) transferring the aqueous polymer slurry to the reactor blow down dump vessel by opening the at least one drain valve b4).

2. The process of claim 1, wherein the reactor blow down system further comprises a blow down separator or a combination of blow down separator elements arranged and adapted for receiving the aqueous polymer slurry from the reactor blow down dump vessel and for separating the aqueous quenching medium from the polymer of the aqueous polymer slurry, and a circulation pump arranged and adapted to return the separated aqueous quenching medium to the blow down dump vessel,
wherein the process further comprises the transfer of the aqueous polymer slurry from the reactor blow down dump vessel to the blow down separator or to the first element of the combination of blow down separator elements and the return of the separated aqueous quenching medium to the blow down dump vessel by use of the circulation pump.

3. The process of claim 1 or 2, wherein the reactor blow down system b) further comprises
b5) a nitrogen blanketing system,
b6) a pressure control systems and/or
b7) a fil-level control system.

4. The process of any of claims 1 to 3, wherein the high-pressure polymerization system further comprises
c) a pressure control valve,
d) a post reactor cooler, and
e) a separation vessel or a cascade of separation vessels,
wherein the post reactor cooler is in fluid communication with the continuously operated polymerization reactor via a first connecting line, wherein the separation vessel or the cascade of separation vessels is in fluid communication with the post reactor cooler via a second connecting line, and wherein the pressure control valve is adapted and arranged to control the fluid communication between the continuously operated polymerization reactor and the post reactor cooler.

5. The process of claim 4, wherein the high-pressure polymerization system further comprises a third connecting line between the reactor blow down vessel and the first connecting line, which branches off the first connecting line downstream of the pressure control valve, and a second emergency valve adapted and arranged to open and close the third connecting line in order to enable or prevent fluid communication with the reactor blow down vessel, and/or
a fourth connecting line between the reactor blow down vessel and the second connecting line and a third emergency valve adapted and arranged to open and close the fourth connecting line in order to enable or prevent fluid communication with the reactor blow down vessel,
wherein the process further comprises after step A) and prior to step C) instead of step B)
B') opening the at least one first emergency valve and the second and/or third emergency valve in case of a disturbance to allow the content of the polymerization system comprising polymer and gaseous components to expand into the closed reactor blow down vessel via the fluid communication system and via the third and/or fourth connecting line, wherein the at least one drain valve b4) is closed.

6. The process of any of the preceding claims, wherein the reactor blow down vessel b1) further comprises at least one gas outlet.

7. The process of any of the preceding claims, wherein, following an occurrence of a disturbance, the polymerization is restarted after the reactor blow down vessel has been emptied by transferring the aqueous polymer slurry to the reactor blow down dump vessel and the first emergency valve or any combination of previously open emergency valves and the drain valve b4) have been closed.

8. The process of any of the preceding claims, wherein the first emergency valve or any combination of previously open emergency valves are closed after step B) or B') as long as the fluid communication system, or the fluid communication system and the third connecting line and/or fourth connecting line are experiencing a positive pressure.

9. The process of any of the preceding claims, wherein the reactor blow down vessel and the reactor blow down dump vessel are inside a protective enclosure and/or wherein the blow down separator or the combination of blow down separator elements and/or the circulation pump or the circulation pumps are outside a protective enclosure.

10. The process of any of the preceding claims, wherein the at least one drain valve b4) is opened to transfer the aqueous polymer slurry to the reactor blow down dump vessel after the first emergency valve or any combination of previously open emergency valves have been closed.

11. A high-pressure polymerization system comprising
a) a continuously operable polymerization reactor having a reactor inlet and having a reactor outlet and
b) a reactor blow down system adapted and arranged to be in fluid communication with the polymerization reactor via a fluid communication system comprising
b1) a reactor blow down vessel,
b2) at least one first emergency valve arranged in the fluid communication system and adapted to open and close the fluid communication between the polymerization reactor and the reactor blow down system,
b3) a reactor blow down dump vessel arranged and adapted to be in fluid communication with the reactor blow down vessel,
b4) at least one drain valve in the fluid communication between the reactor blow down vessel and the reactor blow down dump vessel adapted and arranged to close the reactor blow down vessel in order to enable or prevent fluid communication with the reactor blow down dump vessel,
wherein the reactor blow down vessel is installed above, and being in fluid communication with the reactor blow down dump vessel.

12. The high-pressure polymerization system of claim 11, wherein the reactor blow down system further comprises a blow down separator or a combination of blow down separator elements arranged and adapted for receiving the aqueous polymer slurry from the reactor blow down dump vessel and for separating the aqueous quenching medium from the polymer of the aqueous polymer slurry, and a circulation pump arranged and adapted to return the separated aqueous quenching medium to the blow down dump vessel.

13. The high-pressure polymerization system of claim 11 or 12, wherein the reactor blow down system b) further comprises
b5) a nitrogen blanketing system,
b6) a pressure control systems and/or
b7) a fil-level control system.

14. The high-pressure polymerization system of any of claims 11 to 13, wherein the high-pressure polymerization system further comprises
c) a pressure control valve,
d) a post reactor cooler, and
e) a separation vessel or a cascade of separation vessels,
wherein the post reactor cooler is in fluid communication with the continuously operated polymerization reactor via a first connecting line, wherein the separation vessel or the cascade of separation vessels is in fluid communication with the post reactor cooler via a second connecting line, and wherein the pressure control valve is adapted and arranged to control the fluid communication between the continuously operated polymerization reactor and the post reactor cooler.

15. The high-pressure polymerization system of any of claims 11 to 14, further comprising a third connecting line between the reactor blow down vessel and the first connecting line which branches off the first connecting line downstream of the pressure control valve and a second emergency valve adapted and arranged to open and close the third connecting line in order to enable or prevent fluid communication with the reactor blow down dump vessel, and/or
a fourth connecting line between the reactor blow down vessel and the second connecting line and a third emergency valve adapted and arranged to open and close the fourth connecting line in order to enable or prevent fluid communication with the reactor blow down dump vessel.

## Patentansprüche

1. Verfahren zum Polymerisieren von Ethylen und gegebenenfalls einem oder mehreren Comonomeren, um ein Polymer auf Ethylenbasis in einem Hochdruckpolymerisationssystem zu erhalten, umfassend:
a) einen kontinuierlich betriebenen Polymerisationsreaktor mit einem Reaktoreinlass und einem Reaktorauslass, und
b) ein Reaktorentspannungssystem, das ein Fluidverbindungssystem umfasst und vorgesehen und angeordnet ist, um über das Fluidverbindungssystem in Fluidverbindung mit dem Polymerisationsreaktor zu sein, umfassend:
b1) ein Reaktorentspannungsgefäß, das ein wässriges Quenchmedium enthält,
b2) mindestens ein erstes Notfallventil, das in dem Fluidverbindungssystem angeordnet und vorgesehen ist, um die Fluidverbindung zwischen dem Polymerisationsreaktor und dem Reaktorentspannungssystem zu öffnen und zu schließen,
b3) ein Reaktorentspannungsentleergefäß, das angeordnet und vorgesehen ist, um in Fluidverbindung mit dem Reaktorentspannungsgefäß zu sein, und
b4) mindestens ein Ablaufventil in der Fluidverbindung zwischen dem Reaktorentspannungsgefäß und dem Reaktorentspannungsentleergefäß, das vorgesehen und angeordnet ist, um die Fluidverbindung zwischen dem Reaktorentspannungsgefäß und dem Reaktorentspannungsentleergefäß zu öffnen und zu schließen,
wobei das Reaktorentspannungsgefäß oberhalb des Reaktorentspannungsentleergefäßes installiert ist, und
wobei das Verfahren umfasst:
A) Überwachen des Hochdruckpolymerisationssystems in Bezug auf ein Vorkommen einer Störung, und
B) Öffnen des mindestens einen ersten Notfallventils im Fall einer Störung, um zu ermöglichen, dass der Inhalt des Polymerisationssystems, umfassend Polymer und gasförmige Komponenten, sich über das Fluidverbindungssystem in das Reaktorentspannungsgefäß ausdehnt, wobei das mindestens eine Ablaufventil b4) geschlossen ist,
C) Kontaktieren des Inhalts in dem Reaktorentspannungsgefäß mit dem wässrigen Quenchmedium, um eine wässrige Polymersuspension zu erhalten,
D) Trennen der wässrigen Polymersuspension und der gasförmigen Komponenten, und
E) Überführen der wässrigen Polymersuspension in das Reaktorentspannungsentleergefäß, indem das mindestens eine Ablaufventil b4) geöffnet wird.

2. Verfahren nach Anspruch 1, wobei das Reaktorentspannungssystem des Weiteren einen Entspannungsabscheider oder eine Kombination von Entspannungsabscheiderelementen umfasst, der/die angeordnet und vorgesehen ist bzw. sind, um die wässrige Polymerausschlämmung aus dem Reaktorentspannungsentleergefäß zu empfangen und das wässrige Quenchmedium von dem Polymer der wässrigen Polymersuspension zu trennen, und wobei eine Zirkulationspumpe angeordnet und vorgesehen ist, um das abgetrennte wässrige Quenchmedium in das Entspannungsentleergefäß zurückzugeben,
wobei das Verfahren des Weiteren die Überführung der wässrigen Polymersuspension aus dem Reaktorentspannungsentleergefäß zu dem Entspannungsabscheider oder dem ersten Element der Kombination der Entspannungsabscheiderelemente und die Rückgabe des abgetrennten wässrigen Quenchmediums zu dem Entspannungsentleergefäß mittels der Zirkulationspumpe umfasst.

3. Verfahren nach Anspruch 1 oder 2, wobei das Reaktorentspannungssystem b) des
b5) ein Stickstoff-Inertisierungssystem,
b6) ein Drucksteuersystem und/oder
b7) ein Füllstandssteuersystem.

4. Verfahren nach einem der Ansprüche 1 bis 3, wobei das Hochdruckpolymerisationssystem des Weiteren umfasst:
c) ein Drucksteuerventil,
d) einen nachgeschalteten Reaktorkühler und
e) ein Trenngefäß oder eine Kaskade von Trenngefäßen,
wobei der nachgeschaltete Reaktorkühler über eine erste Verbindungsleitung in Fluidverbindung mit dem kontinuierlich betriebenen Polymerisationsreaktor ist, wobei das Trenngefäß oder die Kaskade von Trenngefäßen über eine zweite Verbindungsleitung in Fluidverbindung mit dem nachgeschalteten Reaktorkühler ist, und wobei das Drucksteuerventil vorgesehen und angeordnet ist, um die Fluidverbindung zwischen dem kontinuierlich betriebenen Polymerisationsreaktor und dem nachgeschalteten Reaktorkühler zu steuern.

5. Verfahren nach Anspruch 4, wobei das Hochdruckpolymerisationssystem des Weiteren umfasst:
eine dritte Verbindungsleitung zwischen dem Reaktorentspannungsgefäß und der ersten Verbindungsleitung, die von der ersten Verbindungsleitung nachgeschaltet zu dem Drucksteuerventil abzweigt, und ein zweites Notfallventil, das vorgesehen und angeordnet ist, um die dritte Verbindungsleitung zu öffnen und zu schließen, um Fluidverbindung mit dem Reaktorentspannungsgefäß zu ermöglichen oder zu verhindern, und/oder
eine vierte Verbindungsleitung zwischen dem Reaktorentspannungsgefäß und der zweiten Verbindungsleitung und ein drittes Notfallventil, das vorgesehen und angeordnet ist, um die vierte Verbindungsleitung zu öffnen und zu schließen, um Fluidverbindung mit dem Reaktorentspannungsgefäß zu ermöglichen oder zu verhindern,
wobei das Verfahren des Weiteren nach Schritt A) und vor Schritt C) anstelle von Schritt B) umfasst:
B') Öffnen des mindestens einen ersten Notfallventils und des zweiten und/oder dritten Notfallventils im Fall einer Störung, um zu ermöglichen, dass der Inhalt des Polymerisationssystems, umfassend Polymer und gasförmige Komponenten, sich über das Fluidverbindungssystem und über die dritte und/oder vierte Verbindungsleitung in das geschlossene Reaktorentspannungsgefäß ausdehnt, wobei das mindestens eine Ablaufventil b4) geschlossen ist.

6. Verfahren nach einem der vorhergehenden Ansprüche, wobei das Reaktorentspannungsgefäß b1) des Weiteren mindestens einen Gasauslass umfasst.

7. Verfahren nach einem der vorhergehenden Ansprüche, wobei nach einem Vorkommen einer Störung die Polymerisation erneut gestartet wird, nachdem das Reaktorentspannungsgefäß geleert worden ist, indem die wässrige Polymersuspension in das Reaktorentspannungsentleergefäß überführt wird und das erste Notfallventil oder jegliche Kombination der zuvor offenen Notfallventile und des Ablaufventils b4) geschlossen worden sind.

8. Verfahren nach einem der vorhergehenden Ansprüche, wobei das erste Notfallventil oder jegliche Kombination der zuvor offenen Notfallventile nach Schritt B) oder B') geschlossen wird, solange das Fluidverbindungssystem oder das Fluidverbindungssystem und die dritte Verbindungsleitung und/oder die vierte Verbindungsleitung einen positiven Druck aufweisen.

9. Verfahren nach einem der vorhergehenden Ansprüche, wobei das Reaktorentspannungsgefäß und das Reaktorentspannungsentleergefäß sich innerhalb einer Schutzumhausung befinden, und/oder wobei der Entspannungsabscheider oder die Kombination der Entspannungsabscheiderelemente und/oder der Zirkulationspumpe oder der Zirkulationspumpen sich außerhalb der Schutzumhausung befindet bzw. befinden.

10. Verfahren nach einem der vorhergehenden Ansprüche, wobei das mindestens eine Ablaufventil b4) geöffnet wird, um die wässrige Polymersuspension in das Reaktorentspannungsentleergefäß zu überführen, nachdem das erste Notfallventil oder jegliche Kombination der zuvor offenen Notfallventile geschlossen wurde.

11. Hochdruckpolymerisationssystem, umfassend:
a) einen kontinuierlich betreibbaren Polymerisationsreaktor mit einem Reaktoreinlass und einem Reaktorauslass, und
b) ein Reaktorentspannungssystem, das vorgesehen und angeordnet ist, um über ein Fluidverbindungssystem in Fluidverbindung mit dem Polymerisationsreaktor zu sein, umfassend:
b1) ein Reaktorentspannungsgefäß,
b2) mindestens ein erstes Notfallventil, das in dem Fluidverbindungssystem angeordnet und vorgesehen ist, um die Fluidverbindung zwischen dem Polymerisationsreaktor und dem Reaktorentspannungssystem zu öffnen und zu schließen,
b3) ein Reaktorentspannungsentleergefäß, das angeordnet und vorgesehen ist,
um in Fluidverbindung mit dem Reaktorentspannungsgefäß zu sein,
b4) mindestens ein Ablaufventil in der Fluidverbindung zwischen dem Reaktorentspannungsgefäß und dem Reaktorentspannungsentleergefäß, das vorgesehen und angeordnet ist, um das Reaktorentspannungsgefäß zu schließen, um Fluidverbindung mit dem Reaktorentspannungsentleergefäß zu ermöglichen oder zu verhindern,
wobei das Reaktorentspannungsgefäß oberhalb des Reaktorentspannungsentleergefäßes installiert ist und in Fluidverbindung mit diesem ist.

12. Hochdruckpolymerisationssystem nach Anspruch 11, wobei das Reaktorentspannungssystem des Weiteren einen Entspannungsabscheider oder eine Kombination von Entspannungsabscheiderelementen umfasst, der/die angeordnet und vorgesehen ist bzw. sind, um die wässrige Polymerausschlämmung aus dem Reaktorentspannungsentleergefäß zu empfangen und das wässrige Quenchmedium von dem Polymer der wässrigen Polymersuspension zu trennen, und wobei eine Zirkulationspumpe angeordnet und vorgesehen ist, um das abgetrennte wässrige Quenchmedium in das Entspannungsentleergefäß zurückzugeben.

13. Hochdruckpolymerisationssystem nach Anspruch 11 oder 12, wobei das Reaktorentspannungssystem b) des Weiteren umfasst:
b5) ein Stickstoff-Inertisierungssystem,
b6) ein Drucksteuersystem und/oder
b7) ein Füllstandssteuersystem.

14. Hochdruckpolymerisationssystem nach einem der Ansprüche 11 bis 13, wobei das Hochdruckpolymerisationssystem des Weiteren umfasst:
c) ein Drucksteuerventil,
d) einen nachgeschalteten Reaktorkühler und
e) ein Trenngefäß oder eine Kaskade von Trenngefäßen,
wobei der nachgeschaltete Reaktorkühler über eine erste Verbindungsleitung in Fluidverbindung mit dem kontinuierlich betriebenen Polymerisationsreaktor ist, wobei das Trenngefäß oder die Kaskade von Trenngefäßen über eine zweite Verbindungsleitung in Fluidverbindung mit dem nachgeschalteten Reaktorkühler ist, und wobei das Drucksteuerventil vorgesehen und angeordnet ist, um die Fluidverbindung zwischen dem kontinuierlich betriebenen Polymerisationsreaktor und dem nachgeschalteten Reaktorkühler zu steuern.

15. Hochdruckpolymerisationssystem nach einem der Ansprüche 11 bis 14, des Weiteren umfassend:
eine dritte Verbindungsleitung zwischen dem Reaktorentspannungsgefäß und der ersten Verbindungsleitung, die von der ersten Verbindungsleitung nachgeschaltet zu dem Drucksteuerventil abzweigt, und ein zweites Notfallventil, das vorgesehen und angeordnet ist, um die dritte Verbindungsleitung zu öffnen und zu schließen, um Fluidverbindung mit dem Reaktorentspannungsentleergefäß zu ermöglichen oder zu verhindern, und/oder
eine vierte Verbindungsleitung zwischen dem Reaktorentspannungsgefäß und der zweiten Verbindungsleitung und ein drittes Notfallventil, das vorgesehen und angeordnet ist, um die vierte Verbindungsleitung zu öffnen und zu schließen, um Fluidverbindung mit dem Reaktorentspannungsentleergefäß zu ermöglichen oder zu verhindern.

## Revendications

1. Procédé de polymérisation d'éthylène, et éventuellement d'un ou de plusieurs comonomères, pour obtenir un polymère à base d'éthylène dans un système de polymérisation à haute pression comprenant
a) un réacteur de polymérisation fonctionnant en continu présentant une entrée de réacteur et présentant une sortie de réacteur et
b) un système de purge de réacteur comprenant un système de communication fluidique, conçu et agencé pour être en communication fluidique avec le réacteur de polymérisation par l'intermédiaire du système de communication fluidique, comprenant
b1) une cuve de purge de réacteur contenant un milieu aqueux de refroidissement rapide,
b2) au moins une première vanne d'urgence agencée dans le système de communication fluidique et conçue pour ouvrir et fermer la communication fluidique entre le réacteur de polymérisation et le système de purge de réacteur,
b3) une cuve d'évacuation de purge de réacteur agencée et conçue pour être en communication fluidique avec la cuve de purge de réacteur et
b4) au moins une vanne de vidange dans la communication fluidique entre la cuve de purge de réacteur et la cuve d'évacuation de purge de réacteur, conçue et agencée pour ouvrir ou fermer la communication fluidique entre la cuve de purge de réacteur et la cuve d'évacuation de purge de réacteur,
la cuve de purge de réacteur étant installée au-dessus de la cuve d'évacuation de purge de réacteur et
le procédé comprenant
A) la surveillance du système de polymérisation à haute pression par rapport à une occurrence d'une perturbation et
B) l'ouverture de ladite au moins une première vanne d'urgence en cas de perturbation pour permettre la dilatation du contenu du système de polymérisation comprenant des constituants polymères et gazeux dans la cuve de purge de réacteur par l'intermédiaire du système de communication fluidique, ladite au moins une vanne de vidange b4) étant fermée,
C) la mise en contact dudit contenu dans la cuve de purge de réacteur avec le milieu aqueux de refroidissement rapide pour obtenir une suspension aqueuse de polymère,
D) la séparation de la suspension aqueuse de polymère et des constituants gazeux et
E) le transfert de la suspension aqueuse de polymère à la cuve d'évacuation de purge de réacteur par ouverture de ladite au moins une vanne de vidange b4).

2. Procédé selon la revendication 1, le système de purge de réacteur comprenant en outre un séparateur de purge ou une combinaison d'éléments séparateurs de purge agencé(s) et conçu(s) pour recevoir la suspension aqueuse de polymère provenant de la cuve d'évacuation de purge de réacteur et pour séparer le milieu aqueux de refroidissement rapide du polymère de la suspension aqueuse de polymère et une pompe de circulation agencée et conçue pour renvoyer le milieu aqueux de refroidissement rapide séparé à la cuve d'évacuation de purge,
le procédé comprenant en outre le transfert de la suspension aqueuse de polymère de la cuve d'évacuation de purge de réacteur au séparateur de purge ou au premier élément de la combinaison d'éléments séparateurs de purge et le retour du milieu aqueux de refroidissement rapide séparé vers la cuve d'évacuation de purge au moyen de la pompe de circulation.

3. Procédé selon la revendication 1 ou 2, le système de purge de réacteur b) comprenant en outre
b5) un système tampon à l'azote,
b6) des systèmes de régulation de pression et/ou
b7) un système de régulation de niveau de remplissage_{[MQA1]}.

4. Procédé selon l'une quelconque des revendications 1 à 3, le système de polymérisation à haute pression comprenant en outre
c) une soupape de régulation de pression,
d) un refroidisseur post-réacteur et
e) une cuve de séparation ou une cascade de cuves de séparation,
le refroidisseur post-réacteur étant en communication fluidique avec le réacteur de polymérisation fonctionnant en continu par l'intermédiaire d'une première conduite de liaison, la cuve de séparation ou la cascade de cuves de séparation étant en communication fluidique avec le refroidisseur post-réacteur par l'intermédiaire d'une deuxième conduite de liaison et la soupape de régulation de pression étant conçue et agencée pour réguler la communication fluidique entre le réacteur de polymérisation fonctionnant en continu et le refroidisseur post-réacteur.

5. Procédé selon la revendication 4, le système de polymérisation à haute pression comprenant en outre une troisième conduite de liaison entre la cuve de purge de réacteur et la première conduite de liaison, qui bifurque à partir de la première conduite de liaison en aval de la soupape de régulation de pression et une deuxième vanne d'urgence conçue et agencée pour ouvrir et fermer la troisième conduite de liaison afin de permettre ou d'empêcher une communication fluidique avec la cuve de purge de réacteur et/ou
une quatrième conduite de liaison entre la cuve de purge de réacteur et la deuxième conduite de liaison et une troisième vanne d'urgence conçue et agencée pour ouvrir et fermer la quatrième conduite de liaison afin de permettre ou d'empêcher une communication fluidique avec la cuve de purge de réacteur,
le procédé comprenant en outre après l'étape A) et avant l'étape C), au lieu de l'étape B),
B') l'ouverture de ladite au moins une première vanne d'urgence et de la deuxième et/ou de la troisième vanne d'urgence en cas de perturbation pour permettre la dilatation du contenu du système de polymérisation comprenant des constituants polymères et gazeux dans la cuve de purge de réacteur fermée par l'intermédiaire du système de communication fluidique et par l'intermédiaire de la troisième et/ou de la quatrième conduite de liaison, ladite au moins une vanne de vidange b4) étant fermée.

6. Procédé selon l'une quelconque des revendications précédentes, la cuve de purge de réacteur b1) comprenant en outre au moins une sortie de gaz.

7. Procédé selon l'une quelconque des revendications précédentes, où, suite à l'occurrence d'une perturbation, la polymérisation est redémarrée après la vidange de la cuve de purge de réacteur par transfert de la suspension aqueuse de polymère à la cuve d'évacuation de purge de réacteur et la fermeture de la première vanne d'urgence ou de toute combinaison de vannes d'urgence préalablement ouverte(s) et de la vanne de vidange b4).

8. Procédé selon l'une quelconque des revendications précédentes, la première vanne d'urgence ou toute combinaison de vannes d'urgence préalablement ouverte(s) étant fermée(s) après l'étape B) ou B') tant que le système de communication fluidique, ou le système de communication fluidique et la troisième conduite de liaison et/ou la quatrième conduite de liaison subi(ssen)t une pression positive.

9. Procédé selon l'une quelconque des revendications précédentes, la cuve de purge de réacteur et la cuve d'évacuation de purge de réacteur étant situées à l'intérieur d'une enceinte de protection et/ou le séparateur de purge ou la combinaison d'éléments séparateurs de purge et/ou la pompe de circulation ou les pompes de circulation étant situés à l'extérieur d'une enceinte de protection.

10. Procédé selon l'une quelconque des revendications précédentes, ladite au moins une vanne de vidange b4) étant ouverte pour transférer la suspension aqueuse de polymère à la cuve d'évacuation de purge de réacteur après la fermeture de la première vanne d'urgence ou de toute combinaison de vannes d'urgence préalablement ouverte(s).

11. Système de polymérisation à haute pression comprenant
a) un réacteur de polymérisation fonctionnant en continu présentant une entrée de réacteur et présentant une sortie de réacteur et
b) un système de purge de réacteur conçu et agencé pour être en communication fluidique avec le réacteur de polymérisation par l'intermédiaire d'un système de communication fluidique comprenant
b1) une cuve de purge de réacteur,
b2) au moins une première vanne d'urgence disposée dans le système de communication fluidique et conçue pour ouvrir et fermer la communication fluidique entre le réacteur de polymérisation et le système de purge de réacteur,
b3) une cuve d'évacuation de purge de réacteur agencée et conçue pour être en communication fluidique avec la cuve de purge de réacteur,
b4) au moins une vanne de vidange dans la communication fluidique entre la cuve de purge de réacteur et la cuve d'évacuation de purge de réacteur, conçue et agencée pour fermer la cuve de purge de réacteur afin de permettre ou d'empêcher une communication fluidique avec la cuve d'évacuation de purge de réacteur,
la cuve de purge de réacteur étant installée au-dessus de la cuve d'évacuation de purge de réacteur et en communication fluidique avec celle-ci.

12. Système de polymérisation à haute pression selon la revendication 11, le système de purge de réacteur comprenant en outre un séparateur de purge ou une combinaison d'éléments séparateurs de purge agencés et conçus pour recevoir la suspension aqueuse de polymère provenant de la cuve d'évacuation de purge de réacteur et pour séparer le milieu aqueux de refroidissement rapide du polymère de la suspension aqueuse de polymère et une pompe de circulation agencée et conçue pour renvoyer le milieu aqueux de refroidissement rapide séparé à la cuve d'évacuation de purge.

13. Système de polymérisation à haute pression selon la revendication 11 ou 12, le système de purge de réacteur b) comprenant en outre
b5) un système tampon à l'azote,
b6) des systèmes de régulation de pression et/ou
b7) un système de régulation de niveau de remplissage_{[MQA2]}.

14. Système de polymérisation à haute pression selon l'une quelconque des revendications 11 à 13, le système de polymérisation à haute pression comprenant en outre
c) une soupape de régulation de pression,
d) un refroidisseur post-réacteur et
e) une cuve de séparation ou une cascade de cuves de séparation,
le refroidisseur post-réacteur étant en communication fluidique avec le réacteur de polymérisation fonctionnant en continu par l'intermédiaire d'une première conduite de liaison, la cuve de séparation ou la cascade de cuves de séparation étant en communication fluidique avec le refroidisseur post-réacteur par l'intermédiaire d'une deuxième conduite de liaison et la soupape de régulation de pression étant conçue et agencée pour réguler la communication fluidique entre le réacteur de polymérisation fonctionnant en continu et le refroidisseur post-réacteur.

15. Système de polymérisation à haute pression selon l'une quelconque des revendications 11 à 14, comprenant en outre une troisième conduite de liaison entre la cuve de purge de réacteur et la première conduite de liaison qui bifurque à partir de la première conduite de liaison en aval de la soupape de régulation de pression et une deuxième vanne d'urgence conçue et agencée pour ouvrir et fermer la troisième conduite de liaison afin de permettre ou d'empêcher une communication fluidique avec la cuve d'évacuation de purge de réacteur et/ou
une quatrième conduite de liaison entre la cuve de purge de réacteur et la deuxième conduite de liaison et une troisième vanne d'urgence, conçue et agencée pour ouvrir et fermer la quatrième conduite de liaison afin de permettre ou d'empêcher une communication fluidique avec la cuve d'évacuation de purge de réacteur.
